# FASCICULE DE BREVET EUROPEEN

(11) **EP 3 255 084 B1**
(45) Date de publication et mention de la délivrance du brevet: **16.09.2020**
(21) Numéro de dépôt: 16305696.3
(22) Date de dépôt: 10.06.2016
(51) Int. Cl.: C08J 7/04, A47K 3/00, B29C 70/26

(54) **PROCEDE DE PREPARATION D'UNE STRUCTURE RENFORCEE**
HERSTELLUNGSVERFAHREN EINER VERSTÄRKTEN STRUKTUR
METHOD FOR PREPARING A REINFORCED STRUCTURE

(43) Date de publication de la demande: 13.12.2017
(73) Titulaire: NEW BATH, 38340 Voreppe (FR); Raigi, 28310 Rouvray Saint Denis (FR)
(72) Inventeur: AUBOURG, Désiré, 10150 PONT SAINTE MARIE (FR); BOULMIER, Augustin, 10000 TROYES (FR); PERRIER, Olivier, 28310 ROUVRAY SAINT DENIS (FR); ROCLE, Dominique, 45400 FLEURY LES AUBRAIS (FR)
(74) Mandataire: Regimbeau

(56) Documents cités:
- EP-A1- 0 965 611
- GB-A- 2 148 786
- GB-A- 2 264 083

## Description

### DOMAINE DE L'INVENTION

La présente invention concerne le domaine technique des renforts composites comprenant avantageusement une matrice thermodurcissable et une charge.

La présente invention se rapporte plus particulièrement à l'utilisation de renforts composites à base de polyuréthane, notamment dans le renforcement de matériau thermoplastique ou de résine thermodurcissable, afin d'obtenir une structure telle qu'une baignoire, une vasque, un panneau mural ou un receveur de douche renforcée.

La présente invention se rapporte plus particulièrement à un procédé de préparation d'une structure renforcée à l'aide de renforts composites, ainsi que la structure susceptible d'être obtenue par un tel procédé.

### ETAT DE LA TECHNIQUE

Les structures utilisées dans le domaine du sanitaire, telles que les baignoires, vasques ou receveurs de douche, étaient traditionnellement réalisées en céramique, fonte émaillée ou acier. La problématique issue de ces matériaux utilisés était liée au poids important de ces derniers entrainant de grandes difficultés d'installation ou de transport. Ces matériaux étaient également susceptibles d'être endommagés facilement lors de chocs.

Il a donc été proposé dans l'art antérieur de réaliser des structures à base de résine de synthèse, telles que des résines à base de polyester ou polyuréthane. Afin d'améliorer les propriétés mécaniques, ces résines sont obligatoirement mélangées avec une charge minérale, telle que la poudre de marbre, la silice ou le carbonate de calcium. Lors de l'industrialisation, une machine de mélange spécifique doit alors être utilisée afin d'être adaptée à la charge choisie. L'investissement associé à cette machine de mélange, ainsi que les coûts d'entretien représentent généralement une somme importante.

La résine la plus couramment utilisée est la résine à base de polyester contenant du styrène, cette dernière ayant un prix beaucoup plus bas que les résines à base de polyuréthane. Néanmoins, le styrène est un Composé d'Origine Volatile (COV) classé dans le groupe 2B (c'est-à-dire potentiellement cancérogène).

Pour ce qui est des résines de polyuréthane qui coutent cher, il est courant d'augmenter le pourcentage de la charge minérale dans la résine afin de diminuer le coût final des produits. Ceci a néanmoins pour effet de rendre le produit plus lourd et plus cassant.

Par ailleurs, les résines de synthèse utilisées ne sont pas auto-lissantes lors de leur application, et il est donc obligatoire d'utiliser des outils spécifiques afin d'étaler correctement la matière dans le moule. De plus, après polymérisation de l'ensemble résine + charge ajoutée, il est parfois nécessaire de passer le produit en usinage afin d'ajuster la planéité de la structure.

En plus des désavantages cités précédemment, les structures réalisées à partir de résine de synthèse, telle que les receveurs de douche présentent des difficultés à être conformes aux essais techniques selon la norme NF EN249. Cette norme impose que le receveur de douche supporte un choc thermique de 90 à 12°C (un cycle) suivie d'un choc thermique de de 75 à 12°C (100 cycles). En raison de la trop grande charge minérale ajoutée dans la résine pour diminuer les coûts, les receveurs sont moins résistants et présentent des fissures lors de ces essais.

Il a également été proposé dans l'art antérieur de fabriquer des structures à partir d'un thermoplastique sur lequel on projette une résine polyuréthane. Néanmoins cette technologie présente de nombreux inconvénients, tels qu'un temps de polymérisation très court (environ 4 à 5 minutes), une montée en température très importante (jusqu'à 115°C), une déformation de la pièce si le produit n'est pas tenu correctement et un taux de rebut matière important lié à la pulvérisation. GB2148786 décrit un procédé de fabrication d'éléments renforcés tels que des baignoires ou receveurs de douche à base de polyuréthane, dans lequel un mélange d'une matière polyuréthane et d'une charge est injecté sous pression dans un moule fermé. EP0965611 décrit un procédé de fabrication d'une structure en polyuréthane, notamment pour receveur de douche, comprenant également une étape d'injection de la matière polyuréthane dans un moule fermé sous pression.

Par conséquent, il existait un besoin de mettre au point un procédé de préparation d'une structure ne présentant pas les inconvénients cités précédemment et permettant d'obtenir une structure renforcée telle qu'une baignoire, une vasque, un panneau mural ou un receveur de douche, supportant davantage les contraintes mécaniques, telles que les chocs thermiques.

La présente invention se propose de fournir un tel procédé.

### RESUME DE L'INVENTION

Ainsi, la présente invention concerne un procédé de préparation d'une structure renforcée, telle qu'un matériau thermoplastique ou une résine thermodurcissable.

La présente invention concerne également la structure renforcée susceptible d'être obtenue par le procédé de préparation selon la présente invention.

### EXPOSE DE L'INVENTION

La présente invention concerne un procédé de préparation d'une structure renforcée comprenant les étapes suivantes :
a) mise en forme de la structure à renforcer sous forme de réceptacle,
b) préparation d'une formulation thermodurcissable liquide à température ambiante comprise entre 18 et 25°C à partir d'un mélange de précurseurs de polymère thermodurcissable, ladite formulation thermodurcissable liquide ayant une viscosité comprise entre 50 et 2000 mPa.s, préférentiellement entre 50 et 600 mPa.s,
c) coulée de ladite formulation thermodurcissable liquide dans ledit réceptacle,
d) ajout d'une charge dans ladite formulation thermodurcissable coulée lors de l'étape c), ladite charge ayant une granulométrie comprise entre 0.05 et 10mm, préférentiellement entre 0.1 et 3mm, un taux d'humidité inférieur à 0,1%, et avantageusement ayant une densité supérieure à la densité de ladite formulation thermodurcissable,
e) polymérisation de ladite formulation thermodurcissable avec ladite charge, formant ainsi une structure renforcée, et
f) éventuellement, coulée d'une couche de finition constituée de ladite formulation thermodurcissable liquide préparée lors de l'étape b).

De manière avantageuse, la structure est un matériau thermoplastique tel que le PMMA (poly(méthacrylate de méthyle), l'ABS (acrylonitrile butadiène styrène) ou l'ABS-PMMA (couche de PMMA coextrudée sur l'ABS) ou une résine thermodurcissable, telle qu'une résine polyuréthane ou polyester, avantageusement la structure est un matériau thermoplastique.

De manière avantageuse, le matériau thermoplastique est en PMMA (poly(méthacrylate de méthyle), en ABS (acrylonitrile butadiène styrène) ou en ABS-PMMA (couche de PMMA coextrudée sur l'ABS).

De manière avantageuse, la résine thermodurcissable est une résine polyuréthane ou polyester.

Avantageusement, lorsque la structure à renforcer est un matériau thermoplastique, sa mise en forme lors de l'étape a), sous forme de réceptacle est réalisée par thermoformage, selon les techniques et moyens connus de l'homme du métier. Le matériau thermoplastique, se présentant avantageusement sous forme de plaque, est ainsi typiquement chauffé afin d'être ramolli, et on profite de cette ductilité pour le mettre en forme sous forme de réceptacle avec application d'un moule. Le matériau durcit pendant la phase de refroidissement, gardant ainsi cette forme. Le réceptacle ainsi obtenu correspond donc à une peau de plastique souple.

Avantageusement, lorsque la structure à renforcer est une résine thermodurcissable, sa mise en forme lors de l'étape a), sous forme de réceptacle est réalisée selon un procédé comprenant les étapes suivantes :
1. application dans un moule négatif, c'est-à-dire creux, d'une couche d'un anti-adhérent,
2. projection à l'aide d'un spray d'une résine thermodurcissable sur la surface intérieure du moule négatif sur lequel a été appliquée la couche anti-adhérente, puis
3. polymérisation de la résine, avantageusement pendant une durée comprise entre 45 et 180 minutes, afin d'obtenir un réceptacle épousant la forme du moule négatif.

Le réceptacle ainsi obtenu peut donc être considéré comme un fond de moule. L'anti-adhérent avantageusement choisi parmi les démoulants de type cires en pâte, spray ou liquide sert à faciliter le démoulage de la résine thermodurcissable appliquée dans le moule pour sa mise en forme.

La mise en forme de la structure à renforcer sous forme de réceptacle permet ainsi de recevoir le matériau de renfort composite (formulation thermodurcissable + charge) lors des étapes ultérieures c) et d). La mise en forme permet également à partir d'un matériau thermoplastique ou d'une résine thermodurcissable de donner la forme souhaitée à la structure que l'on souhaite renforcer. La forme donnée au matériau thermoplastique ou à la résine thermodurcissable est avantageusement une forme de baignoire, de vasque, de panneau mural ou de receveur de douche.

Avantageusement, lorsque la structure à renforcer est un receveur de douche ou un panneau mural, l'intégralité de la structure sous forme de réceptacle reçoit le matériau composite et se trouve ainsi renforcée. Avantageusement, lorsque la structure à renforcer est une vasque ou une baignoire, typiquement seule une partie du réceptacle reçoit le matériau composite et est alors renforcée, il s'agit typiquement des rebords de la structure.

Lors de l'étape b), la préparation d'une formulation thermodurcissable liquide à température ambiante est réalisée à partir d'un mélange d'au moins deux précurseurs de polymère thermodurcissable. Par température ambiante, on entend une température comprise entre 18°C et 25°C. La réaction de polymérisation débute lors du mélange des précurseurs et permet ainsi un début de polymérisation des précurseurs en un polymère thermodurcissable. La durée de polymérisation dépend de la nature et/ou de la quantité des précurseurs utilisés, ainsi que de la présence éventuelle d'un catalyseur et de la nature et de l'épaisseur du réceptacle. En effet, plus le réceptacle sera épais, plus la quantité de formulation thermodurcissable coulée lors de l'étape c) sera importante et plus la durée de polymérisation sera longue.

Avantageusement, les étapes c) et d) sont réalisées avant la polymérisation complète de la formulation thermodurcissable liquide. Ainsi, la durée de polymérisation peut être comprise entre 1 et 90 minutes, avantageusement entre 1 et 60 minutes, de manière avantageuse entre 5 et 15 minutes.

De manière avantageuse, le mélange de précurseurs de polymère thermodurcissable comprend au moins un polyol et au moins un isocyanate. De manière avantageuse, le polymère thermodurcissable est un polyuréthane.

Selon l'invention, le ou les polyol(s) peuvent être choisis parmi les polyols biosourcés ou parmi les polyols d'origine pétrolière, notamment parmi les polyols polyethers, polyesters, polycaprolactones, polycarbonates diols, polybutadiènes hydroxylés, les polymères hydroxylés, les polyols d'origine naturelle de type ricin ou toute chaîne moléculaire présentant des liaisons hydroxyles libres. De manière avantageuse, le ou les polyol(s) sont des polyols d'origine naturelle de type ricin.

Le ou les polyol(s) sont avantageusement formulés selon les techniques et moyens connus de l'homme du métier à partir d'un mélange comprenant des polyols, additifs, colorants et catalyseurs.

Selon l'invention, le ou les isocyanate(s) peuvent être choisis parmi les mono isocyanates, les diisocyanates et/ou polyisocyanates, tels que le diphenylmethane diisocyanate (MDI), le toluène 2,4- et 2,6- diisocyanate (TDI), l'isophorone diisocyanate (l'IRDI), le 4,4'-dicyclohexylmethane diisocyanate (H₁₂MDI), le 1,6-hexamethylene diisocyanate (HDI), le 1,4-cyclohexane diisocyanate (CHDI), le bis(isocyanatomethyl)cyclo-hexane (H₆XDI.DDI), le tetramethyxylylene diisocyanate (TMXDI), toutes chaines moléculaires présentant des liaisons isocyanates et leurs mélanges. De manière avantageuse, l'isocyanate est le diphenylmethane diisocyanate (MDI).

De manière avantageuse, le rapport pondéral polyol/isocyanate est compris entre 100/10 et 100/300, préférentiellement entre 100/40 et 100/80.

De manière avantageuse, la formulation thermodurcissable liquide préparée lors de l'étape b) comprend en outre un catalyseur choisi parmi les amines et les sels métalliques tels que les produits commerciaux DABCO®, JEFFCAT® , POLYCAT®, NIAX®, TOYOCAT® et PC CAT®.

De manière avantageuse, la formulation thermodurcissable liquide préparée lors de l'étape b) comprend en outre un ou plusieurs additifs choisis parmi les antioxydants (par exemple le pentaerythritol tetrakis(3-(3,5-di-tert-butyl-4-hydroxyphenyl)propionate)), les colorants (par exemple la pâte pigmentaire de noir de carbone), les surfactants (par exemple des solutions de diméthylsiloxane), les agents mouillants (par exemple de type polysiloxanes), les tensioactifs, les agents débullants (par exemple de type silicone), les agents de dessiccation et les agents d'adsorption (par exemple les zéolithes).

Ce ou ces additifs représentent de préférence de 0 à 5% en poids de la formulation thermodurcissable liquide préparée lors de l'étape b).

De manière avantageuse, la formulation thermodurcissable liquide préparée lors de l'étape b) a une densité comprise entre 0,3 et 2,4, préférentiellement entre 1 et 1,25 et une viscosité comprise entre 50 et 2000mPa.s, préférentiellement entre 50 et 600 mPa.s, de manière encre plus préférée entre 450 et 550 mPa.s.

La formulation thermodurcissable liquide présente comme avantage de ne pas comprendre de COV (pas d'utilisation de résine à base de styrène) ni de solvant, d'être auto-lissante, brillante après polymérisation et de posséder une forte adhérence sur les thermoplastiques et résines thermodurcissables évitant ainsi l'emploi d'une primaire d'adhérence.

Selon un mode de réalisation particulier, une étape consistant à appliquer une primaire d'adhérence sur la structure à renforcer sous forme de réceptacle suite à l'étape a) en amont des étapes b) ou c) pourra être envisagée lorsque la structure thermoplastique est à base de polyoléfines, avantageusement à base de polyéthylène.

De manière avantageuse, la primaire d'adhérence est une primaire d'adhérence pour matériau thermoplastique choisie Körabond HG77®, 3M Primaire® et Sika® Aktivator

Le mélange de précurseurs de polymère thermodurcissable est réalisé typiquement dans une machine de mélange standard telle qu'une machine basse ou haute pression dimensionnée selon la taille du réceptacle apte à recevoir lors de l'étape c) ladite formulation thermodurcissable liquide ainsi formée lors de l'étape b).

Lors de l'étape d), une charge est ajoutée dans la formulation thermodurcissable coulée lors de l'étape c). Afin de pouvoir s'enfoncer correctement dans la formulation thermodurcissable, la charge a une densité avantageusement supérieure à la densité de ladite formulation thermodurcissable. La charge doit par ailleurs avoir un taux d'humidité inférieur à 0,1%. En effet, la présence d'eau dans la charge favorise la formation de CO₂ avec le précurseur isocyanate entrainant ainsi un moussage et une expansion incontrôlée. Les charges minérales étant pour la majorité issues de carrière ont une teneur en humidité trop importante pour pouvoir être utilisées dans le procédé de la présente invention. Les charges minérales anhydres comme le kaolin calciné ont une granulométrie trop fine et représentent un coût trop important.

Un avantage technique du procédé selon l'invention réside dans le fait que la charge est ajoutée à la formulation thermodurcissable déjà formée à partir du mélange de précurseurs dans la machine de mélange et coulée lors de l'étape c). En effet, l'ajout de la charge en dehors de la machine de mélange permet d'utiliser différents types de charge sans entrainer de surcout lié à l'utilisation de différentes machines spécifiques.

Selon un mode de réalisation particulier de l'invention, l'étape d) d'ajout de la charge peut être réalisée soit juste avant l'étape c) de coulée de la formulation thermodurcissable liquide, soit juste avant l'étape b) de préparation de cette formulation. En effet, les étapes de coulée de la formulation thermodurcissable et d'ajout de la charge peuvent être interverties sans conséquence sur les propriétés de la structure renforcée obtenue.

Ainsi, selon un mode de réalisation particulier, le procédé de préparation d'une structure renforcée comprend les étapes suivantes :
a) mise en forme de la structure à renforcer sous forme de réceptacle,
b) ajout d'une charge dans ledit réceptacle, ladite charge ayant une granulométrie comprise entre 0.05 et 10mm, préférentiellement entre 0.1 et 3mm, un taux d'humidité inférieur à 0,1%, et avantageusement ayant une densité supérieure à la densité de la formulation thermodurcissable préparée en parallèle,
c) préparation en parallèle d'une formulation thermodurcissable liquide à température ambiante à partir d'un mélange de précurseurs de polymère thermodurcissable, ladite formulation thermodurcissable liquide ayant une viscosité comprise entre 50 et 2000 mPa.s, préférentiellement entre 50 et 600 mPa.s,
d) coulée de ladite formulation thermodurcissable liquide dans ledit réceptacle contenant ladite charge ajoutée lors de l'étape b),
e) polymérisation de ladite formulation thermodurcissable avec ladite charge, formant ainsi une structure renforcée, et
f) éventuellement, coulée d'une couche de finition constituée de ladite formulation thermodurcissable liquide préparée lors de l'étape c).

De manière avantageuse la charge à une densité supérieure à la densité de ladite formulation thermodurcissable et est composée de matières choisies parmi les matières thermoplastiques, les matières thermodurcissables, leurs sous-produits tels que les chutes techniques de ces derniers, la farine de bois, le verre tel que le verre recyclé et leurs mélanges. Avantageusement, la charge utilisée est du verre, notamment du verre recyclé.

Le verre, tel que le verre recyclé est avantageusement du verre industriel tel que le verre du bâtiment (verre de fenêtre) ou le verre de l'automobile (verre de pare-brise) ou du verre creux (verre ménager). Le verre issu du recyclage est broyé, décanté, lavé puis séché avant de pouvoir être ajoutée directement sans autre traitement à la formulation lors de l'étape d). Selon un mode de réalisation particulier, lorsque la charge utilisée est de la farine de bois, la granulométrie est comprise entre 0.09 et 1.25mm.

Selon un mode de réalisation particulier, lorsque la charge utilisée est du verre, la granulométrie est comprise entre 0,05 et 10mm, avantageusement entre 0,1 et 3mm.

Selon un mode de réalisation particulier, lorsque la charge utilisée est choisie parmi les matières thermoplastiques, les matières thermodurcissables, leurs sous-produits tels que les chutes, la granulométrie est comprise entre 8 et 10mm.

Les matières thermoplastiques et thermodurcissables sont avantageusement ajoutées directement dans la formulation thermodurcissable ou dans le réceptacle sans subir de traitement. Les sous-produits des matières thermoplastiques et thermodurcissables sont avantageusement des chutes techniques.

La charge représente entre 10 et 60% en poids de la masse totale.

La charge est typiquement ajoutée en plusieurs points à l'aide d'une machine de dépose de charge, telle que Gravimax de chez Wittman. Ce type de machine est capable de déposer différentes charges car elle possède des compartiments pour les différencier. L'étape e) permet la polymérisation de la formulation thermodurcissable avec la charge, afin de former une structure renforcée.

Dans un mode de réalisation, suite à l'ajout de la charge lors de l'étape d), le réceptacle est mis en vibration. Avantageusement, la vibration est réalisée à l'aide d'une table vibrante. Dans un autre mode de réalisation, la charge ajoutée lors de l'étape d) est avantageusement raclée sur l'ensemble de la surface de la formulation thermodurcissable coulée dans le réceptacle, typiquement à l'aide d'un système de raclette (sous forme de peigne)

Cette étape de vibration ou de raclage permet d'assurer une répartition homogène de l'ensemble de la charge dans la formulation thermodurcissable.

De manière optionnelle, une coulée d'une couche de finition de la formulation thermodurcissable liquide préparée lors de l'étape b) peut être appliquée sur la structure renforcée formée lors de l'étape e) lorsque la viscosité de cette dernière aura atteint le seuil de gélification. On considère que le seuil de gélification est atteint lorsque la formulation liquide se transforme en gel. Une des méthodes couramment utilisée par l'homme du métier pour définir le seuil de gélification consiste à utiliser une pointe telle qu'une aiguille, avec laquelle on pénètre la formulation thermodurcissable en cours de polymérisation. Lors du retrait de la pointe, s'il y a un fil de matière entre la pointe et la formulation thermodurcissable en cours de polymérisation on considère que la matière est passée de l'état liquide à l'état de gel et que le seuil de gélification est atteint. Ainsi, il n'est pas nécessaire d'attendre la polymérisation complète lors de l'étape e) pour pouvoir couler la couche de finition. De manière avantageuse, la couche de finition représente entre 10 et 30% en poids de la formulation thermodurcissable liquide coulée dans le réceptacle.

L'ensemble des étapes du procédé de la présente invention permet ainsi d'obtenir une structure renforcée en comparaison des structures de l'art antérieur.

De manière avantageuse, la structure renforcée est une baignoire, une vasque, un panneau mural ou un receveur de douche ou au moins une partie de celles-ci, typiquement au moins une partie d'une baignoire ou d'une vasque.

Selon un mode de réalisation particulier, la présente invention concerne un procédé de préparation d'une structure renforcée comprenant les étapes suivantes :
a) mise en forme de la structure à renforcer sous forme de réceptacle,
b) préparation d'une formulation de polyuréthane liquide à température ambiante à partir d'un mélange d'au moins un polyol et d'au moins un isocyanate, ladite formulation de polyuréthane liquide ayant une viscosité comprise entre 50 et 2000 mPa.s, préférentiellement entre 50 et 600 mPa.s,
c) coulée de ladite formulation de polyuréthane liquide dans ledit réceptacle,
d) ajout d'une charge dans ladite formulation thermodurcissable coulée lors de l'étape c), ladite charge ayant une granulométrie comprise entre 0.05 et 10mm, préférentiellement entre 0.1 et 3mm, un taux d'humidité inférieur à 0,1%, et avantageusement ayant une densité supérieure à la densité de ladite formulation de polyuréthane,
e) polymérisation de ladite formulation de polyuréthane avec ladite charge, formant ainsi une structure renforcée, et
f) éventuellement, coulée d'une couche de finition constituée de ladite formulation de polyuréthane liquide préparée lors de l'étape b).

La présente invention concerne également la structure renforcée susceptible d'être obtenue par le procédé de préparation selon l'invention.

De manière avantageuse, la structure renforcée obtenue selon le procédé de la présente invention est une baignoire, une vasque, un panneau mural ou un receveur de douche ou au moins une partie de celles-ci, typiquement au moins une partie d'une baignoire ou d'une vasque.

### EXEMPLES

### 1. Préparation d'une structure renforcée

Les précurseurs utilisés dans l'exemple ci-dessous pour préparer un mélange de polymérisation conforme à la présente invention sont les suivants :
- précurseur GYROTHANE® (marque commerciale déposée) de grade 900 ou 909, fabriqué par la société RAIGI (fournisseur), constitué principalement de polyols de type polyéther polypropylène glycol, d'amines aromatiques, d'additifs (zéolithe), de pigment de carbone et de catalyseur de type métallique.
- précurseur RAIGIDUR® (marque commerciale déposée) de grade FPG, fabriqué par la société RAIGI (fournisseur), constitué d'isocyanate de type prépolymère à base de MDI.

On indiquera ci-après à titre de simple illustration, un exemple particulier de préparation d'un receveur de douche renforcé selon le procédé de la présente invention.
a) mise en forme d'un matériau thermoplastique par thermoformage sous forme de réceptacle, le réceptacle obtenu ayant la forme d'un receveur de douche,
b) préparation d'une formulation de polyuréthane liquide à température ambiante à partir d'un mélange des précurseurs GYROTHANE® et RAIGIDUR® selon un ratio isocyanate/polyol de 1 :1,8, ladite formulation de polyuréthane liquide ayant une viscosité de 550 mPa.s, une densité de 1,10 et un temps de polymérisation de 12 minutes,
c) coulée de ladite formulation de polyuréthane liquide dans ledit réceptacle,
d) ajout de verre représentant 60% du poids total dans ladite formulation polyuréthane coulée lors de l'étape c), le verre ayant une granulométrie comprise entre 1,5 et 3mm, un taux d'humidité inférieur à 0,1%, et une densité de 2,48,
e) polymérisation de ladite formulation de polyuréthane avec le verre, formant ainsi un receveur de douche renforcée

### 2. Exemples comparatifs

Le tableau 1 ci-après présente différents essais comparatifs entre des receveurs de douche présents dans le commerce et un receveur de douche renforcé selon le procédé de la présente invention.

L'ensemble de ces receveurs a été testé selon les deux normes EN 14527 et NF EN 249. Pour la commercialisation des receveurs de douches en Europe, il est obligatoire d'être conforme à la norme EN 14527 qui consiste à effectuer 100 cycles, eau chaude (75°C) / eau froide (12°C). Pour un niveau de qualité supérieure, il est possible d'avoir le label ou certification NF pour le marché français. Au niveau de ce label, il est impératif d'être conforme à la norme NF EN 249 qui consiste à effectuer un cycle eau chaude (90°C) / eau froide (12°C) avant de réaliser 100 cycles, eau chaude (75°C) / eau froide (12°C).

Le tableau 1 ci-dessous, présente des essais comparatifs de résistance à la variation de température selon les normes EN 14527 et NF EN 249, entre un receveur préparé selon le procédé de la présente invention et des receveurs du marché.

**Tableau 1**

| | Receveur selon l'invention | Receveur du marché n°1 | Receveur du marché n°2 | Receveur du marché n°3 | Receveur du marché n°4 | Receveur du marché n°5 | Receveur du marché n°6 |
|---|---|---|---|---|---|---|---|
| 100 Cycles à 75°C/12°C (NF EN 14527) | Conforme | Non conforme (Fissure après 4 cycles) | Conforme | Non conforme (Fissure après 85 cycles) | Non conforme (Fissure après 60 cycles | Non conforme (Fissure après 1 cycle) | Conforme |
| Cycle à 90°C/12°C (NF EN 249) | Conforme | Non effectué | Non-conforme (Fissure) | Non effectué | Non effectué | Non effectué | Non Conforme (Fissure) |

Les essais réalisés ont permis de constater qu'un nombre important de receveurs de douche présents dans le commerce et censés être conformes à la norme NF EN 14527 ne répondait finalement pas aux conditions imposées par cette norme. En effet, les receveurs 1, 3, 4 et 5 présentent des fissures avant la fin des 100 cycles. Les seuls receveurs 2 et 6 conformes à la norme NF EN 14527 présentent quant à eux des fissures lors des essais réalisés aux conditions imposées par la norme NF EN 249.

Les receveurs de douche de la présente invention ne présentent aucune fissure lors des différents essais de chocs thermiques selon les normes NF EN 14527 et NF EN 249. Ces tests démontrent une amélioration de la résistance aux contraintes mécaniques des receveurs ayant été renforcés selon le procédé de la présente invention.

## Revendications

1. Procédé de préparation d'une structure renforcée comprenant les étapes suivantes :
a) mise en forme de la structure à renforcer sous forme de réceptacle,
b) préparation d'une formulation thermodurcissable liquide à température ambiante comprise entre 18 °C et 25 °C, à partir d'un mélange de précurseurs de polymère thermodurcissable, ladite formulation thermodurcissable liquide ayant une viscosité comprise entre 50 et 2000 mPa.s, préférentiellement entre 50 et 600 mPa.s,
c) coulée de ladite formulation thermodurcissable liquide dans ledit réceptacle,
d) ajout d'une charge dans ladite formulation thermodurcissable coulée lors de l'étape c), ladite charge ayant une granulométrie comprise entre 0.05 et 10mm, préférentiellement entre 0.1 et 3mm, un taux d'humidité inférieur à 0,1%, et avantageusement ayant une densité supérieure à la densité de ladite formulation thermodurcissable,
e) polymérisation de ladite formulation thermodurcissable avec ladite charge, formant ainsi une structure renforcée, et
f) éventuellement, coulée d'une couche de finition constituée de ladite formulation thermodurcissable liquide préparée lors de l'étape b).

2. Procédé de préparation selon la revendication 1, **caractérisé en ce que** ladite structure est un matériau thermoplastique ou une résine thermodurcissable.

3. Procédé de préparation selon la revendication 2, **caractérisé en ce que** ledit matériau thermoplastique est en PMMA, en ABS ou en ABS-PMMA.

4. Procédé de préparation selon la revendication 2, **caractérisé en ce que** ladite résine thermodurcissable est une résine polyuréthane ou polyester.

5. Procédé de préparation selon l'une quelconques des revendications précédentes, **caractérisé en ce que** ledit mélange de précurseurs de polymère thermodurcissable comprend au moins un polyol et au moins un isocyanate.

6. Procédé de préparation selon la revendication 5, **caractérisé en ce que** le rapport pondéral polyol/isocyanate est compris entre 100/10 et 100/300, préférentiellement entre 100/40 et 100/80.

7. Procédé de préparation selon l'une quelconques des revendications précédentes, **caractérisé en ce que** ledit polymère thermodurcissable est un polyuréthane.

8. Procédé de préparation selon l'une quelconques des revendications précédentes, **caractérisé en ce que** ladite formulation thermodurcissable liquide préparée lors de l'étape b) comprend en outre un catalyseur choisi parmi les amines et les sels métalliques.

9. Procédé de préparation selon l'une quelconques des revendications précédentes, **caractérisé en ce que** ladite formulation thermodurcissable liquide préparée lors de l'étape b) a une densité comprise entre 0,3 et 2,4, préférentiellement entre 1 et 1,25.

10. Procédé de préparation selon l'une quelconques des revendications précédentes, **caractérisé en ce que** ladite charge a une densité supérieure à la densité de ladite formulation thermodurcissable et est composée de matières choisies parmi les matières thermoplastiques, les matières thermodurcissables, la farine de bois, le verre tel que le verre recyclé, leurs sous-produits et leurs mélanges.

11. Procédé de préparation selon l'une quelconques des revendications précédentes, **caractérisé en ce que** suite à l'ajout de la charge lors de l'étape d), le réceptacle est mis en vibration.

12. Procédé de préparation selon l'une quelconques des revendications 1 à 10, **caractérisé en ce que** la charge ajoutée lors de l'étape d) est raclée sur l'ensemble de la surface de la formulation thermodurcissable coulée dans le réceptacle.

13. Procédé de préparation selon l'une quelconques des revendications précédentes, **caractérisé en ce qu'**il comprend en outre une étape d'application d'une primaire d'adhérence sur la structure à renforcer sous forme de réceptacle suite à l'étape a) en amont des étapes b) ou c), lorsque ladite structure est un matériau thermoplastique à base de polyoléfines.

14. Procédé de préparation selon l'une quelconques des revendications précédentes, caractérisé en ce ladite structure renforcée est une baignoire, une vasque, un panneau mural ou un receveur de douche ou au moins une partie de celles-ci.

15. Structure renforcée susceptible d'être obtenue par le procédé de préparation selon l'une quelconques des revendications précédentes dans lequel entre 10 et 60% en poids de charge sont ajoutés lors de l'étape d), par rapport à la masse totale, **caractérisée en ce que** ladite structure est une baignoire, une vasque, un panneau mural ou un receveur de douche ou au moins une partie de celles-ci.

## Patentansprüche

1. Verfahren zur Herstellung einer verstärkten Struktur, das die folgenden Schritte umfasst:
a) Formen der Struktur, die verstärkt werden soll, in Form eines Behälters,
b) Herstellen einer flüssigen, wärmehärtbaren Formulierung bei Umgebungstemperatur im Bereich zwischen 18 °C und 25 °C auf Grundlage einer Mischung von Vorläufern eines wärmehärtbaren Polymers, wobei die flüssige wärmehärtbare Formulierung eine Viskosität im Bereich zwischen 50 und 2 000 mPa.s, vorzugsweise zwischen 50 und 600 mPa.s aufweist,
c) Gießen der flüssigen wärmehärtbaren Formulierung in den Behälter,
d) Zugeben eines Füllstoffs in die im Schritt c) gegossene wärmehärtbare Formulierung, wobei der Füllstoff eine Körnung im Bereich zwischen 0,05 und 10 mm, vorzugsweise zwischen 0,1 und 3 mm aufweist, einen Feuchtegrad von weniger als 0,1 %, und vorteilhafterweise eine Dichte aufweist, die höher ist als die Dichte der wärmehärtbaren Formulierung,
e) Polymerisieren der wärmehärtbaren Formulierung mit dem Füllstoff, wodurch eine verstärkte Struktur gebildet wird, und
f) gegebenenfalls Gießen einer Deckschicht, die aus der im Schritt b) hergestellten flüssigen, wärmehärtbaren Formulierung besteht.

2. Herstellungsverfahren nach Anspruch 1, **dadurch gekennzeichnet, dass** es sich bei der Struktur um ein thermoplastisches Material oder ein wärmehärtbares Harz handelt.

3. Herstellungsverfahren nach Anspruch 2, **dadurch gekennzeichnet, dass** das thermoplastische Material aus PMMA, aus ABS oder aus ABS-PMMA ist.

4. Herstellungsverfahren nach Anspruch 2, **dadurch gekennzeichnet, dass** es sich bei dem wärmehärtbaren Harz um ein Polyurethan- oder Polyesterharz handelt.

5. Herstellungsverfahren nach einem der vorstehenden Ansprüche, **dadurch gekennzeichnet, dass** die Mischung von Vorläufern eines wärmehärtbaren Polymers mindestens ein Polyol und mindestens ein Isocyanat umfasst.

6. Herstellungsverfahren nach Anspruch 5, **dadurch gekennzeichnet, dass** das Gewichtsverhältnis Polyol/Isocyanat im Bereich zwischen 100/10 und 100/300, vorzugsweise zwischen 100/40 und 100/80 liegt.

7. Herstellungsverfahren nach einem der vorstehenden Ansprüche, **dadurch gekennzeichnet, dass** es sich bei dem wärmehärtbaren Polymer um ein Polyurethan handelt.

8. Herstellungsverfahren nach einem der vorstehenden Ansprüche, **dadurch gekennzeichnet, dass** die im Schritt b) hergestellte flüssige, wärmehärtbare Formulierung weiter einen Katalysator umfasst, der aus den Aminen und den Metallsalzen ausgewählt ist.

9. Herstellungsverfahren nach einem der vorstehenden Ansprüche, **dadurch gekennzeichnet, dass** die im Schritt b) hergestellte flüssige, wärmehärtbare Formulierung eine Dichte im Bereich zwischen 0,3 und 2,4, vorzugsweise zwischen 1 und 1,25 aufweist.

10. Herstellungsverfahren nach einem der vorstehenden Ansprüche, **dadurch gekennzeichnet, dass** der Füllstoff eine Dichte aufweist, die größer ist als die Dichte der wärmehärtbaren Formulierung, und sich aus Materialien zusammensetzt, die aus thermoplastischen Materialien, wärmehärtbaren Materialien, Holzmehl, Glas, wie etwa Recyclingglas, deren Nebenprodukten und deren Mischungen ausgewählt sind.

11. Herstellungsverfahren nach einem der vorstehenden Ansprüche, **dadurch gekennzeichnet, dass** im Anschluss an das Zugeben des Füllstoffs im Schritt d) der Behälter in Vibration versetzt wird.

12. Herstellungsverfahren nach einem der Ansprüche 1 bis 10, **dadurch gekennzeichnet, dass** der im Schritt d) zugegebene Füllstoff auf der Gesamtheit der Fläche der in den Behälter gegossenen wärmehärtbaren Formulierung abgestreift wird.

13. Herstellungsverfahren nach einem der vorstehenden Ansprüche, **dadurch gekennzeichnet, dass** es weiter einen Schritt des Auftragens einer Haftgrundierung auf die zu verstärkende Struktur in Form eines Behälters im Anschluss an den Schritt a) und vor den Schritten b) oder c) umfasst, wenn es sich bei der Struktur um ein thermoplastisches Material auf Basis von Polyolefinen handelt.

14. Herstellungsverfahren nach einem der vorstehenden Ansprüche, **dadurch gekennzeichnet, dass** es sich bei der verstärkten Struktur um eine Badewanne, ein Waschbecken, eine Wandplatte oder eine Duschwanne, oder mindestens einen Teil davon handelt.

15. Verstärkte Struktur, die über das Herstellungsverfahren nach einem der vorstehenden Ansprüche erhalten werden kann, wobei im Schritt d) zwischen 10 und 60 Gewichts-% Füllstoff im Verhältnis zur Gesamtmasse zugegeben werden, **dadurch gekennzeichnet, dass** es sich bei der Struktur um eine Badewanne, ein Waschbecken, eine Wandtafel oder eine Duschwanne, oder mindestens einen Teil davon handelt.

## Claims

1. Method for preparing a reinforced structure comprising the following steps:
a) forming the structure to be reinforced in the form of a receptacle,
b) preparing a liquid thermosetting formulation at ambient temperature comprised between 18 °C and 25 °C, using a mixture of thermosetting polymer precursors, said liquid thermosetting formulation having a viscosity between 50 and 2,000 mPa.s, preferably between 50 and 600 mPa.s,
c) pouring said liquid thermosetting formulation into said receptacle,
d) adding a filler into said thermosetting formulation poured during step c), said filler having a granulometry comprised between 0.05 and 10mm, preferably between 0.1 and 3mm, a moisture content less than 0.1%, and advantageously having a density greater than the density of said thermosetting formulation,
e) polymerising said thermosetting formulation with said filler, forming as such a reinforced structure, and
f) possibly, pouring a finishing layer constituted of said liquid thermosetting formulation prepared during step b).

2. Method for preparing according to claim 1, **characterised in that** said structure is a thermoplastic material or a thermosetting resin.

3. Method for preparing according to claim 2, **characterised in that** said thermoplastic material is made of PMMA, of ABS or of ABS-PMMA.

4. Method for preparing according to claim 2, **characterised in that** said thermosetting resin is a polyurethane or polyester resin.

5. Method for preparing according to any of the preceding claims, **characterised in that** said mixture of precursors of thermosetting polymer comprises at least one polyol and at least one isocyanate.

6. Method for preparing according to claim 5, **characterised in that** the polyol/isocyanate weight ratio is between 100/10 and 100/300, preferably between 100/40 and 100/80.

7. Method for preparing according to any of the preceding claims, **characterised in that** said thermosetting polymer is a polyurethane.

8. Method for preparing according to any of the preceding claims, **characterised in that** said liquid thermosetting formulation prepared during step b) further comprises a catalyst chosen from amines and metallic salts.

9. Method for preparing according to any of the preceding claims, **characterised in that** said liquid thermosetting formulation prepared during step b) has a density between 0.3 and 2.4, preferably between 1 and 1.25.

10. Method for preparing according to any of the preceding claims, **characterised in that** said filler has a density greater than the density of said thermosetting formulation and is composed of materials chosen from thermoplastic materials, thermosetting materials, wood-meal, glass such as recycled glass, their by-products and mixtures thereof.

11. Method for preparing according to any of the preceding claims, **characterised in that** following the adding of the filler during step d), the receptacle is put into vibration.

12. Method for preparing according to any of claims 1 to 10, **characterised in that** the filler added during step d) is scraped over the entire surface of the thermosetting formulation poured into the receptacle.

13. Method for preparing according to any of the preceding claims, **characterised in that** it further comprises a step of applying an adhesion primer on the structure to be reinforced in the form of a receptacle following the step a) upstream of steps b) or c), when said structure is a thermoplastic material with a polyolefin base.

14. Method for preparing according to any of the preceding claims, **characterised in that** said reinforced structure is a bathtub, a washbasin, a wall panel or a shower tray or at least one portion of the latter.

15. Reinforced structure able to be obtained by the method of preparing according to any of the preceding claims wherein between 10 and 60% by weight of filler are added during step d), by weight of the total mass, **characterised in that** said structure is a bathtub, a washbasin, a wall panel or a shower tray or at least one portion of the latter.
